# EUROPÄISCHE PATENTANMELDUNG

(11) **EP 1 319 544 A1**
(43) Veröffentlichungstag der Anmeldung: **18.06.2003**
(21) Anmeldenummer: 02025332.4
(22) Anmeldetag: 13.11.2002
(51) Int. Cl.: B60J 7/00, B60R 11/02

(54) **Dacheinheit zum Einbau in ein Fahrzeugdach**

(30) Priorität: 13.12.2001 DE 10161476
(71) Anmelder: Webasto Vehicle Systems International GmbH, 82131 Stockdorf (DE)
(72) Erfinder: de Gaillard, Francois, 85390 Mouilleron en pareds (FR)
(74) Vertreter: Konnerth, Dieter Hans

(57) **Zusammenfassung**

Die Erfindung betrifft eine Dacheinheit (3), die zum Einbau in eine in einem Fahrzeugdach (2) gebildete Öffnung vorgesehen ist und einen transparenten Bereich und/oder eine mit einem öffnungsfähigen Deckel verschließbare Dachöffnung aufweist, wobei an einem im Einbauzustand dem Fahrzeuginnenraum zugewandten Unterteil (7) der Dacheinheit (3) zumindest ein Bildschirm (11) integriert ist, der aus einer im Unterteil (7) flächig angeordneten Ruhestellung in eine Nutzstellung verstellbar und insbesondere herabklappbar ist.

## Beschreibung

Die Erfindung betrifft eine Dacheinheit, die zum Einbau in eine in einem Fahrzeugdach gebildete Öffnung vorgesehen ist und einen transparenten Bereich und/oder eine mit einem öffnungsfähigen Deckel verschließbare Dachöffnung aufweist, sowie ein Fahrzeug mit einer derartigen Dacheinheit.

Eine solche Dacheinheit, die auch als "After-Market-Dach" bezeichnet wird, ist beispielsweise aus der EP 0 719 667 B1 bekannt. Sie wird in eine nachträglich in ein festes Fahrzeugdach eingebrachte Öffnung eingebaut, so daß die Fahrzeuginsassen auch bei einem ursprünglich geschlossenen Fahrzeugdach die Vorteile eines transparenten Dachbereichs oder einer zumindest teilweise freilegbaren Dachöffnung genießen können.

Eine Erhöhung des Nutzwertes eines Fahrzeugs besteht des weiteren darin, im Fahrzeug für die Fahrzeuginsassen das Betrachten von Videofilmen oder das Spielen von Videospielen zu ermöglichen. Zu diesem Zweck ist aus der US-A-5,946,055 eine Bildschirmeinrichtung für ein Fahrzeug bekannt geworden, die einen an einem Gehäuse schwenkbar gelagerten Flachbildschirm aufweist. Das Gehäuse ist an der Unterseite eines Fahrzeugdaches befestigt. Der Flachbildschirm ist aus einer Ruhestellung, in der er zumindest teilweise in dem Gehäuse flach liegend aufgenommen ist, und einer Nutzstellung, in der er vom Gehäuse nach unten absteht, um eine Querachse verschwenkbar. Das den Flachbildschirm enthaltende Gehäuse ist in einer solchen Position an dem Fahrzeugdach angebracht, daß der herabgeklappte Flachbildschirm zur Betrachtung durch die hinteren Insassen in einem Personenwagen geeignet ist. Bei einer in der US 6,292,236 B1 offenbarten Bildschirmeinrichtung ist das Gehäuse oberhalb eines Beifahrersitzes angeordnet, so daß sowohl der Beifahrer wie auch Insassen auf den Rücksitzen den Flachbildschirm betrachten können.

Der Einbau einer solchen Bildschirmeinrichtung, bei dem das Gehäuse an der Unter- oder Innenseite des festen Fahrzeugdaches befestigt wird, kann entweder bei der Herstellung des Fahrzeugs oder auch nachträglich erfolgen. Der nachträgliche Einbau kann jedoch problematisch sein, wenn geeignete Verankerungspunkte am Fahrzeugdach bzw. am Fahrzeughimmel, die eine dauerhafte Befestigung ermöglichen, nicht vorgesehen oder nur schwer zu finden sind.

Der Erfindung liegt die Aufgabe zugrunde, eine eingangs genannte Dacheinheit zu schaffen, die neben den bekannten Vorteilen bezüglich Lichteinfall und Lüftungsmöglichkeit weitere Nutzungsmöglichkeiten bietet, sowie ein Fahrzeug mit einer derartigen Dacheinheit zu schaffen.

Die Aufgabe wird bei der oben genannten Dacheinheit erfindungsgemäß dadurch gelöst, daß an einem im Einbauzustand dem Fahrzeuginnenraum zugewandten Unterteil der Dacheinheit zumindest ein Bildschirm integriert ist, der aus einer im Unterteil flächig angeordneten Ruhestellung in eine Nutzstellung verstellbar und insbesondere herabklappbar ist. Auf diese Weise kann beim nachträglichen Einbau der Dacheinheit gleichzeitig ein Bildschirm im Fahrzeuginnenraum angebracht werden, ohne daß hierfür eine zusätzliche Befestigung erforderlich ist. Bei Bedarf wird der ansonsten z. B. gänzlich oder weitgehend versenkt angeordnete Bildschirm in seine Nutzstellung gebracht.

Vorteilhafte Ausgestaltungen der Erfindung sind in den Unteransprüchen angegeben.

Vorzugsweise ist an der Dacheinheit eine Einrichtung zur Daten- oder Informationsbereitstellung und -verarbeitung für die mittels des Bildschirms darzustellenden Informationen integriert, so daß beim nachträglichen Einbau der Dacheinheit keine Datenleitungen zu entfernt angeordneten Datengeräten wie DVD-Spielern oder Videogeräten erforderlich sind.

Des weiteren kann eine Bedieneinheit für die Informationsdarstellung an der Dacheinheit vorgesehen sein oder zumindest mit dieser koppelbar sein. Die Bedieneinheit ist an der Dacheinheit insbesondere versenkt aufgenommen und kann von einem Nutzer entnommen werden, wobei sie beispielsweise mittels eines Signalkabels oder einer Fernsteuerung mit der Informationsverarbeitungseinrichtung bzw. dem Bildschirm verbunden ist.

Wenn das Unterteil der Dacheinheit jeweils von einem von mehreren auswechselbaren Teilen gebildet ist, die unterschiedliche Konfigurationen aufweisen, so kann durch nachträgliches Auswechseln ein wunschgemäß gestaltetes Unterteil mit einem oder mit mehreren Bildschirmen und entsprechenden Datenspeichereinrichtungen wie DVD-Spieler oder dergleichen angebracht werden.

Zweckmäßigerweise ist der Bildschirm aus Platzgründen ein Flachbildschirm.

Die Aufgabe wird schließlich auch durch ein Fahrzeug mit einer Dacheinheit nach einem der Ansprüche 1 bis 7 gelöst.

Nachfolgend wird eine erfindungsgemäße Dacheinheit anhand von Ausführungsbeispielen unter Bezugnahme auf die Zeichnung näher erläutert. Es zeigt:
- Fig. 1: in einer perspektivischen Ansicht einen Fahrzeuginnenraum mit einer erfindungsgemäßen Dacheinheit mit einem herabgeklappten Bildschirm;
- Fig. 2: in einer perspektivischen Ansicht den Fahrzeuginnenraum mit der Dacheinheit mit hochgeklapptem Bildschirm;
- Fig. 3: in einer perspektivischen Ansicht den Fahrzeuginnenraum mit der zwei Bildschirme enthaltenden Dacheinheit; und

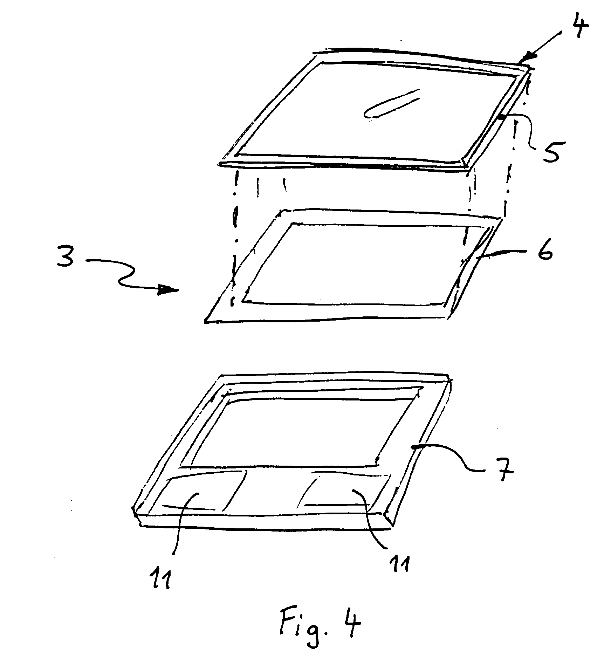

- Fig. 4: in einer Explosionsdarstellung die Dacheinheit.

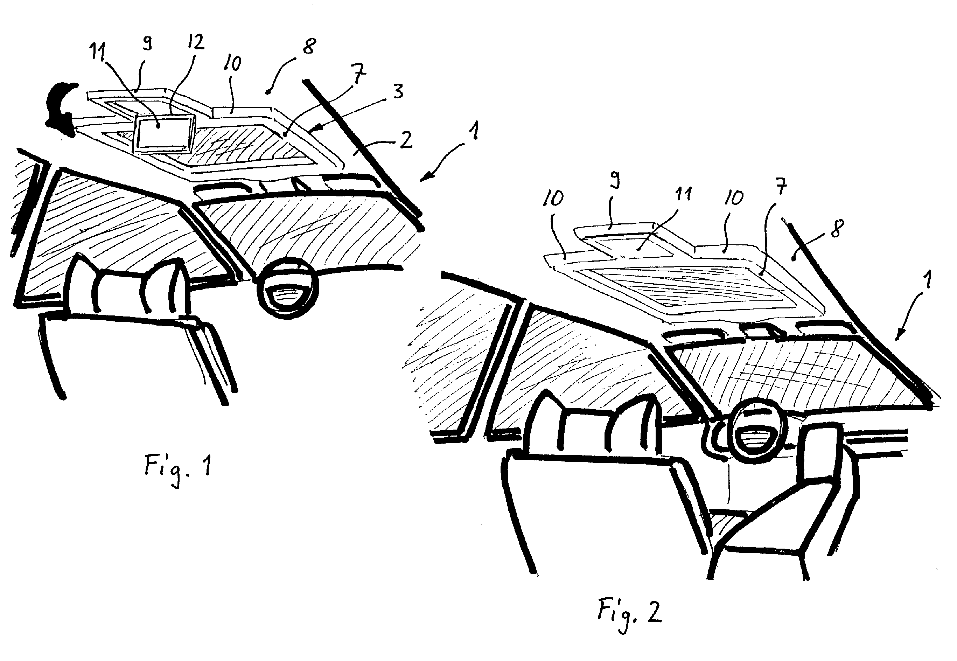

Ein Personenwagen 1 üblicher Bauart (siehe Fig. 1 und 2) mit z. B. zwei Sitzreihen enthält ein festes Fahrzeugdach 2, in das eine Dacheinheit 3 nachträglich eingebaut ist. Dazu wird in das feste Fahrzeugdach 2 eine Öffnung z. B. durch Schneiden oder Sägen eingebracht, die an die Größe der anzubringenden Dacheinheit 3 angepaßt und insbesondere rechtwinklig gebildet ist, um beispielsweise ein in etwa rechtwinkliges transparentes oberes Dachteil 4 der Dacheinheit 3 in oder auf der Öffnung anzuordnen, wobei ein oberer umlaufender Dichtrahmen 5 des Dachteils 4 auf dem die Öffnung umgebenden Rand des Fahrzeugdaches 2 zu liegen kommt. An der Unter- oder Innenseite des Fahrzeugdaches 2 wird ein zugeordneter Befestigungsrahmen 6 angeordnet und mit dem Dachteil 4 fest verbunden, so daß die Dacheinheit 3 fest und dicht am Fahrzeugdach 2 befestigt ist.

Eine rahmenartige Innenabdeckung 7, die ein Unterteil der Dacheinheit 3 bildet, wird an die Unter- oder Innenseite des Fahrzeugdaches 2 angesetzt und an dem Befestigungsrahmen 6 festgelegt, so daß sie den Befestigungsrahmen 6 abdeckt und einen optisch einwandfreien Übergang zur Dachunterseite bzw. zum Fahrzeughimmel 8 bildet.

Die Innenabdeckung 7 enthält gemäß dem in den Fig. 1 und 2 dargestellten Ausführungsbeispiel eine z. B. in etwa rechtwinklige Rahmenerweiterung 9, die sich vom hinteren Querrand 10 der Innenabdeckung 7 mittig nach hinten erstreckt. In der Rahmenerweiterung 9 ist ein Flachbildschirm 11 um eine Schwenkachse schwenkbeweglich gelagert, so daß er aus seiner Ruhestellung (Fig. 2), in der er im wesentlichen in der Rahmenerweiterung 9 versenkt und damit bündig zu dem gesamten Befestigungsrahmen 6 angeordnet ist, in seine Nutzstellung (Fig. 1) verschwenkbar ist, in der er um seinen Vorder- oder Oberrand 12, an dem die Schwenkachse verläuft, die z. B. von zwei vom Flachbildschirm 11 seitlich abstehenden Lagerzapfen gebildet ist, abwärts geschwenkt ist in eine bedarfsweise z. B. vertikale oder schräg nach vorne gerichtete Anordnung. Der Flachbildschirm 11 liegt somit in günstiger Ausrichtung, so daß die auf dem Flachbildschirm 11 dargestellten Informationen von Fahrzeuginsassen von den Rücksitzen aus betrachten werden können.

Da sich die Rahmenerweiterung 9 in der Ebene der Innenabdeckung 7 und damit über die Innenseite bzw. den Himmel 8 des Fahrzeugdaches 2 erstreckt, ist für den Flachbildschirm 11 kein eigener Ausschnitt an der Innenseite bzw. am Himmel 8 des Fahrzeugdaches 2 erforderlich, so daß die Anbringung des Flachbildschirms 11 in einfacher Weise möglich ist. Somit kann auch an einer solchen Dacheinheit 3, die an dem Fahrzeugdach 2 schon montiert ist, nachträglich durch Austausch der ursprünglichen Innenabdeckung, die keinen Flachbildschirm 11 enthält, gegen die beschriebene Innenabdeckung 7 ein Flachbildschirm 11 angebracht werden.

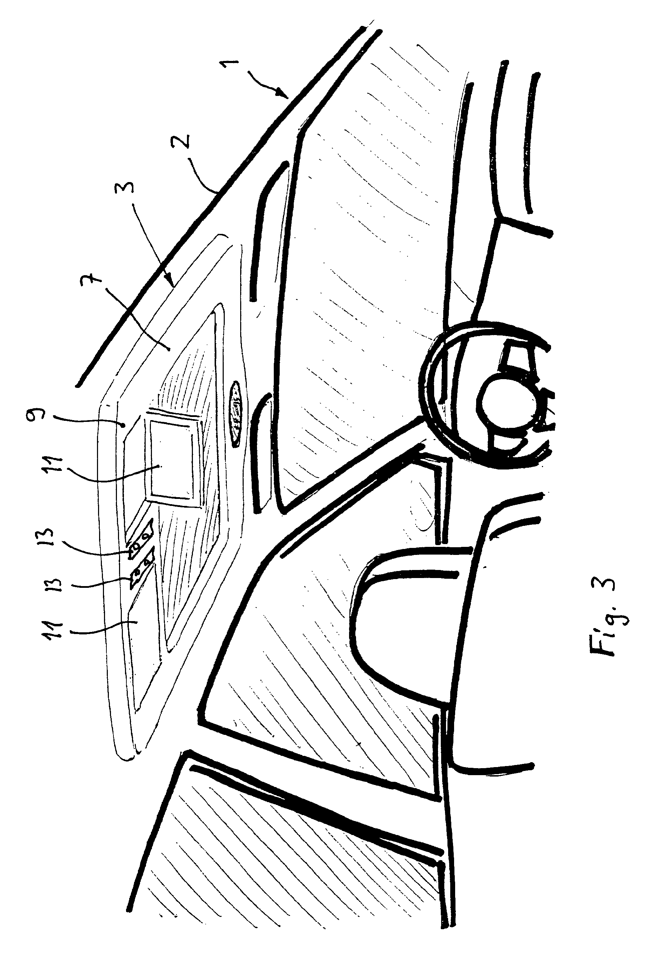

Bei der in Fig. 3 dargestellten Dacheinheit 3 enthält die Innenabdeckung 7 eine rückseitige Rahmenerweiterung 9, die sich über die gesamte Breite der Innenabdeckung 7 erstreckt und in der zwei Flachbildschirme 11 nebeneinander angeordnet und in der schon beschriebenen Art schwenkbar gelagert sind. Somit können zwei Fahrzeuginsassen auf den Rücksitzen wahlweise und unabhängig voneinander ihren jeweiligen Flachbildschirm 11 nutzen und die Bilddarstellungen z. B. von Fernsehprogrammen oder Filmen von Video- oder DVD-Medien verfolgen oder Videospiele spielen.

Jedem Flachbildschirm 11 kann eine Bedienungseinrichtung 13 zur Steuerung des Bildschirms wie auch zur Programmwahl oder der Spielesteuerung zugeordnet sein, die beispielsweise in der Innenabdeckung 7 versenkt angeordnet ist und über Kabelverbindung oder drahtlose Verbindung mit der Innenabdeckung bzw. dem Bildschirm und/oder mit einer Datenquelle wie einem im Fahrzeug angeordneten Fernsehempfänger oder einem Videorecorder verbunden ist.

In einer alternativen Gestaltung ist die Rahmenerweiterung vom Hinterrand der Innenabdeckung in Richtung zu deren Vorderrand gebildet, so daß die Rahmenerweiterung, in der zumindest ein Flachbildschirm angeordnet ist, unterhalb des transparenten Dachteils angeordnet ist und sich nicht über den Himmel unter dem Fahrzeugdach erstreckt. Damit steht auch ein höherer Einbauraum für den Bildschirm oder für Zusatzgeräte in der Innenabdeckung bzw. der Rahmenerweiterung zur Verfügung.

Statt eines fest eingebauten Dachteils kann die Dacheinheit auch einen an seinem Hinterrand ausstellbaren Deckel aufweisen.

### Bezugszeichenliste

- 1: Personenwagen
- 2: Fahrzeugdach
- 3: Dacheinheit
- 4: oberes Dachteil
- 5: Dichtrahmen
- 6: Befestigungsrahmen
- 7: Innenabdeckung
- 8: Fahrzeughimmel
- 9: Rahmenerweiterung
- 10: hinterer Querrand
- 11: Flachbildschirm
- 12: Oberrand
- 13: Bedieneinheit

## Patentansprüche

1. Dacheinheit, die zum Einbau in eine in einem Fahrzeugdach gebildete Öffnung vorgesehen ist und einen transparenten Bereich und/oder eine mit einem öffnungsfähigen Deckel verschließbare Dachöffnung aufweist,
**dadurch gekennzeichnet,**
**daß** an einem im Einbauzustand dem Fahrzeuginnenraum zugewandten Unterteil (7) der Dacheinheit (3) zumindest ein Bildschirm (11) integriert ist, der aus einer im Unterteil (7) flächig angeordneten Ruhestellung in eine Nutzstellung verstellbar und insbesondere herabklappbar ist.

2. Dacheinheit nach Anspruch 1,
**dadurch gekennzeichnet, daß** eine Informationsverarbeitungseinrichtung für die mittels des Bildschirms (11) darzustellenden Informationen an der Dacheinheit (3) integriert ist.

3. Dacheinheit nach Anspruch 2,
**dadurch gekennzeichnet, daß** eine Bedieneinheit (13) für den Bildschirm (11) bzw. die Informationsdarstellung an der Dacheinheit (3) vorgesehen ist.

4. Dacheinheit nach Anspruch 3,
**dadurch gekennzeichnet, daß** die Bedieneinheit an der Dacheinheit (3) insbesondere versenkt aufgenommen und von einem Nutzer entnehmbar ist.

5. Dacheinheit nach Anspruch 3 oder 4,
**dadurch gekennzeichnet, daß** die Bedieneinheit mittels eines Signalkabels oder einer Fernsteuerung mit der Informationsverarbeitungseinrichtung bzw. dem Bildschirm (11) verbunden ist.

6. Dacheinheit nach einem der Ansprüche 1 bis 5,
**dadurch gekennzeichnet, daß** das Unterteil (7) der Dacheinheit (3) jeweils von einem von mehreren auswechselbaren Teilen gebildet ist, die unterschiedliche Konfigurationen aufweisen.

7. Dacheinheit nach einem der Ansprüche 1 bis 6,
**dadurch gekennzeichnet, daß** der Bildschirm ein Flachbildschirm (11) ist.

8. Fahrzeug mit einer Dacheinheit nach einem der Ansprüche 1 bis 7.
